(19) Europäisches Patentamt
European Patent Office
Office européen des brevets

(11) EP 4 265 675 A1

(12) # EUROPEAN PATENT APPLICATION
published in accordance with Art. 153(4) EPC

(43) Date of publication:
**25.10.2023 Bulletin 2023/43**

(21) Application number: **21906511.7**

(22) Date of filing: **10.12.2021**

(51) International Patent Classification (IPC):
***C08K 5/14*** *(2006.01)* ***C08L 23/16*** *(2006.01)*

(52) Cooperative Patent Classification (CPC):
**C08K 5/14; C08L 23/16**

(86) International application number:
**PCT/JP2021/045460**

(87) International publication number:
**WO 2022/131149 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2020 JP 2020209887**

(71) Applicant: **NOF Corporation**
**Shibuya-ku**
**Tokyo 150-6019 (JP)**

(72) Inventors:
- **TAKUMA, Kanako**
  **Chita-gun, Aichi 470-2373 (JP)**
- **HAYASHI, Masaki**
  **Chita-gun, Aichi 470-2373 (JP)**

(74) Representative: **Mewburn Ellis LLP**
**Aurora Building**
**Counterslip**
**Bristol BS1 6BX (GB)**

(54) **RUBBER COMPOSITION FOR HOT AIR CROSS-LINKING, CROSS-LINKED RUBBER, AND PRODUCTION METHOD OF CROSS-LINKED RUBBER**

(57) It is to provide a rubber composition for hot air cross-linking excellent in stability of storage and capable of cross-linking under the presence of ais, and to provide a cross-linked rubber having excellent mechanical property and heat resistance of the rubber after the cross-linking.

A rubber composition for hot air cross-linking comprises 100 parts by mass of one or more rubber components (A) selected from the group consisting of an ethylene-propylene rubber and an ethylene-propylene-diene rubber, 1.0 parts by mass or more and 15.0 parts by mass or less of an organic peroxide (B), and 0.01 parts by mass or more and 9.0 parts by mass or less of a reducing agent (C).

EP 4 265 675 A1

**Description**

TECHNICAL FIELD

The present invention relates to a rubber composition for hot air cross-linking, cross-linked rubber and method of producing a cross-linked rubber.

BACKGROUND OF THE INVENTION

An organic peroxide has been widely used as cross-linking agents for a rubber, thermoplastic elastomer and resin, and it is possible to improve the mechanical property, heat resistance and the like of a cross-linked rubber by the cross-linking with the organic peroxide than by vulcanization by sulfur. It is considered that carbon-carbon bonds generated by the cross-linking by the organic peroxide is more chemically stable than carbon-sulfur bonds formed by the cross-linking by sulfur.

In the cross-linking reaction by the organic peroxide, oxygen radicals, generated as a result of the decomposition of the organic peroxide, extract hydrogens from the rubber to generate polymer radicals, and the polymer radicals together subjected to coupling to proceed the cross-linking reaction of the rubber.

However, in the case that the rubber is cross-linked by the organic peroxide under the presence of air, the cross-linking reaction is suppressed on the surface of the rubber by oxygen atoms in the air, so that the surface of the rubber becomes sticky. Thus, the cross-linking of the rubber by the organic peroxide is typically performed in a steam tube, molten salt bath, steam autoclave or discharged and sealed metal mold, and all of them are designed so that heat is applied onto the rubber while oxygen atoms are discharged during the cross-linking process. Time and high cost are required for introducing and operating these facilities capable of discharging oxygen atoms.

As described above, it has been desired the cross-linking by the organic peroxide providing the mechanical property and heat resistance under the presence of air, and it is disclosed that a sulfur compound is used simultaneously (patent documents 1 and 2).

(Prior technical documents)

(Patent documents)

[Patent document 1] Japanese patent publication No. 1998-110070 A
[Patent document 2] Japanese patent publication No. 2018-502949 A

SUMMARY OF THE INVENTION

[Object to be solved by the invention]

According to patent document 1, it is disclosed that an organic peroxide, sulfur and a vulcanization accelerator are used simultaneously to obtain cross-linked rubber having excellent mechanical property and surface property. However, in the case that the organic peroxide, sulfur and vulcanization accelerator are used simultaneously, the storage stability of the rubber composition is inferior and cross-linking reaction proceeds during storage over a long time.

According to patent document 2, poly(alkyl phenol) sulfide and benzothiazyl sulfide are used simultaneously as the organic peroxides so that tackiness on the surface of the cross-linked rubber is improved. However, the mechanical property of the cross-linked rubber is not sufficient and the improvement is desired.

Considering the problems described above, an object of the present invention is to provide a hot air cross-linking rubber composition having excellent storage stability and capable of being cross-linked under the presence of air.

Further, an object of the present invention is to provide a cross-linked rubber having excellent mechanical property and heat resistance after the cross-linking and a method of producing the same.

(Solution for the object)

That is, the present invention is as follows.

(1) A rubber composition for hot air cross-linking, said rubber composition comprising:

100 parts by mass of one or more rubber components (A) selected from the group consisting of an ethylene-propylene rubber and an ethylene propylene diene rubber,
1.0 parts by mass or more and 15.0 parts by mass or less of an organic peroxide (B), and
0.01 parts by mass or more and 9.0 parts by mass or less of a reducing agent (C).

(2) The rubber composition for hot air cross-linking of (1), further comprising a vulcanization accelerator (D).
(3) The rubber composition for hot air cross-linking of (1) or (2), wherein said reducing agent (C) comprises one or more selected from the group consisting of ascorbic acid, a derivative of ascorbic acid, barbituric acid, a derivative of barbituric acid, an anionic salt of dithionous acid, an anionic salt of sulfurous acid, sulfinic acid, a salt of sulfinic acid and sodium hydroxy methane sulfinate (Rongalite).
(4) The rubber composition for hot air cross-linking of (3), wherein the derivative of ascorbic acid is represented by the following formula (1).

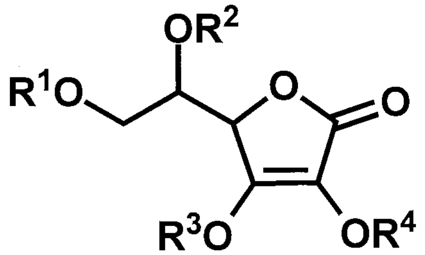

(1)

(In the formula (1),
$R^1$, $R^2$, $R^3$ and $R^4$ independently represent hydrogen, a hydrocarbon group having 2 to 18 carbon atoms or a residual group of a fatty acid having 2 to 18 carbon atoms.)
(5) The rubber composition for hot air cross-linking of (1) to (4), wherein said organic peroxide (B) comprises one or more selected from the group consisting of a dialkyl peroxide and peroxy ketal.
(6) A cross-linked rubber formed from the rubber composition for hot air cross-linking of (1) to (5).
(7) A method of producing a cross-linked rubber, the method comprising heating the rubber composition for hot air cross-linking of (1) to (5) under the presence of air at 120°C to 250°C.

(Effects of the Invention)

The rubber composition for hot air cross-linking of the present invention is excellent in storage stability and cross-linking property under the presence of air. Further, the cross-linked rubber produced according to the present invention is excellent in mechanical property and heat resistance.
Although the details of the mechanism of the effects of the rubber composition for hot air-cross-linking of the present invention is unclear, it can be speculated as follows. However, the present invention is not interpreted to be limited to the mechanism. In the case that the cross-linking of a rubber is performed by an organic peroxide under the presence of air, polymer radicals are trapped by oxygen atoms in the air to generate peroxy radicals, and the peroxy radicals are converted into hydroperoxide through hydrogen abstraction reaction. As the hydroxy peroxide has a high decomposition temperature and hard to decompose by heat generated during the cross-linking reaction, the cross-linking reaction is suppressed. Thus, stickiness remains on the surface of the rubber in the vicinity of air. On the other hand, the hydroperoxide can be decomposed through redox reaction at a lower temperature by the reducing agent, so that the cross-linking reaction on the surface of the cross-linked rubber can be facilitated.

EMBODIMENTS FOR CARRYING OUNT THE INVENTION

(One or more rubber components (A) selected from the group consisting of an ethylene-propylene rubber and an ethylene-propylene-diene rubber)

The rubber component (A) is composed of one or both of an ethylene-propylene rubber and an ethylene-propylene-diene rubber.
As the rubber component (A), the ethylene-propylene-diene rubber is more preferred on the viewpoint of mechanical property of the cross-linked rubber.

The Mooney viscosity (ML(1+4) 100°C) of the ethylene-propylene rubber may preferably be 20 or higher and more preferably be 30 or higher. Further, although the upper limit of the Mooney viscosity of the ethylene-propylene rubber is particularly limited, the Mooney viscosity (ML(1+4) 100°C) may preferably be 60 or lower and more preferably be 50 or lower, on the viewpoint of availability.

The Mooney viscosity (ML(1+4) 125°C) of the ethylene-propylene-diene rubber may preferably be 10 or higher and more preferably be 20 or higher. Further, although the upper limit of the Mooney viscosity of the ethylene-propylene-diene rubber is not particularly limited, the Mooney viscosity (ML(1+4) 125°C) may preferably be 80 or lower and more preferably be 70 or lower, on the viewpoint of availability.

The ethylene-propylene rubber may be used alone or the two or more kinds may be used in combination. Further, the ethylene-propylene-diene rubber may be used alone or the two or more kinds may be used in combination. Further, known procedure may be applied as the method of polymerizing the ethylene-propylene rubber and/or ethylene-propylene-diene rubber.

Diene monomers as constituents of the ethylene-propylene-diene rubber are not particularly limited and may be, for example, cyclic dienes such as 5-ethylydene-2-norbornene, 5-propylydene-5-notbornene, dicyclopentadiene, 5-vinyl-2-norbornene, 5-methylene-2-norbornene, 5-isopropyledene-2-norbornene, norbornadiene and the like, and chain non-conjugated dienes such as 1,4-hexadiende, 4-methyl-1,4-hexadiene, 5-methyl-1,4-hexadiene, 5-methyl-1,5-heptadiene, 6-methyl-1,5-heptadiene, 6-methyl-1,7-octadiene and the like. 5-ethylydene-2-norbornene is particularly preferred.

Commercial products of the ethylene-propylene rubber and /or ethylene-propylene-diene rubber include oil-extended grade containing a plasticizer and the like and non-oil extended grade without a plasticizer and the like, and may appropriately selected depending on property required for the rubber.

The content of ethylene in the ethylene-propylene rubber may preferably be 30 wt.% to 70 wt.% and more preferably be 40 wt.% to 60 wt.%.

The content of ethylene in the ethylene-propylene-diene rubber may preferably be 30 wt.% to 80 wt.% and more preferably be 40 wt.% to 70 wt.%.

The content of diene in the ethylene-propylene-diene rubber may preferably be 2 wt.% to 15 wt.% and more preferably be 4 wt.% to 9 wt.%.

Commercial products of the non-oil extended grade of the ethylene-propylene rubber and/or ethylene-propylene-diene rubber may be, for example, product names "Mitsui EPT3045 (content of diene 4.7 wt.%, content of ethylene 56 wt.%)", "Mitsui EPTX-4010M (content of diene 7.6 wt.%, content of ethylene 54 wt.%)", "Mitsui EPT4021 (content of diene 8.1 wt.%, content of ethylene 51 wt.%)", "Mitsui EPT4045 (content of diene 8.1 wt.%, content of ethylene 54 wt.%)", "Mitsui EPT4045M (content of diene 7.6 wt.%, content of ethylene 45 wt.%)", "Mitsui EPT8030M (content of diene 9.5 wt.%, content of ethylene 47 wt.%" "EPDM products produced by Mitsui chemical are listed above.", Product names "JSREP33 (diene content 8.1 wt.%. ethylene content 52 wt.%, Mooney viscosity (ML(1+4) 125°C) 28)", "JSRT7241 (diene content 7.7 wt.%, ethylene content 52 wt.%, Mooney viscosity (ML(1+4) 125°C) 27)", "JSREP21 (diene content 5.8 wt.%, ethylene content 61 wt.°/. Mooney viscosity (ML(1+4) 125°C) 26)", "JSREP51 (diene content 5.8 wt.%, ethylene content 67 wt.%, Mooney viscosity (ML(1+4) 125°C) 23)", "JSREP22 (diene content 4.5 wt.%, ethylene content 54 wt.%, Mooney viscosity (ML(1+4) 125°C) 27)", "JSREP123 (diene content 4.5 wt.%, ethylene content 58 wt.%, Mooney viscosity (ML(1+4) 125°C) 19.5)" "EPDMS" produced by JSR corporation are listed above, Product names "Mitsui EPT0045 (ethylene content 51 wt.%, Mooney viscosity (ML(1+4) 100°C) 40)" "EPM produced by Mitsui Chemical are listed above", product names: "JSREP11 (ethylene content 52 wt.%, Mooney viscosity (ML(1+4) 100°C) 40)"EPM produced by JSR corporation is listed above" and the like.

(Organic peroxide (B))

The organic peroxide (B) may be appropriately selected depending on the cross-linking patterns of thermoelastic elastomers and/or rubbers described below. The organic peroxide (B) may be used alone or the two or more kinds may be used in combination.

The organic peroxide (B) may be, for example, hydroperoxides, dialkyl peroxides, peroxy esters, peroxy ketals, peroxy monocarbonates, diacyl peroxides, peroxy dicarbonates and the like. Dialkyl peroxides and peroxy ketals are preferred and dialkyl peroxides are more preferred, on the viewpoint of thermal decomposition of the organic peroxide, storage stability of the rubber composition and mechanical property of the cross-linked rubber.

The dialkyl peroxides may be, for examples, di(2-t-butylperoxyisopropyl) benzene, dicumyl peroxide, 2,5-dimethyl-2,5-di(t-butylperoxy)hexane, 2,5-dimethyl-2,5-di(t-butylperoxy)hexyne, t-butylcumyl peroxide, di-t-butyl peroxide, di-t-hexyl peroxide and the like.

Further, the peroxy ketal may be, for example, 1,1-di(t-butyl peroxy)cyclohexane, 1,1-di(t-hexylperoxy)cyclohexane, 2,2-di(t-butyl peroxy)butane, n-butyl 4,4-di-(t-butylperoxy)valerate, 2,2-di(4,4-di-(t-butylperoxy)cyclohexyl)propane and the like.

Further, among them, as the half-life temperature is adapted to the cross-linking temperature of the rubber, di(2-t-butylperoxy isopropyl)benzene, dicumyl peroxide, 2,5-dimethyl-2,5-di(t-butylperoxy)hexane and 1,1-di(t-butylperoxy)cyclohexane are particularly preferred.

(Reducing agent (C))

Although the reducing agent (C) is not particularly preferred, for example, pyridine, ascorbic acid, a derivative of ascorbic acid, barbituric acid, a derivative of barbituric acid, an anionic salt of dithionous acid, an anionic salt of sulfurous acid, sulfinic acid, a salt of sulfinic acid, sodium hydroxy methane sulfinate (Rongalite), an aliphatic amine, a heterocyclic amine, aromatic amine, and a thiourea compound may be listed, and ascorbic acid and the derivative of ascorbic acid are preferred on the viewpoint of mechanical property and stickiness on the surface of the cross-linked rubber. The reasons are that hydroperoxides generated on the surface of the cross-linked rubber by the reaction with oxygen is reduced effectively, although this reasoning is not limiting.

(Ascorbic acid and derivative of ascorbic acid)

The derivative of ascorbic acid may be the derivative of ascorbic acid represented by the following formula (1).

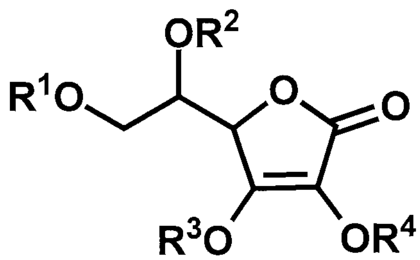

(1)

(In the formula (1),
$R^1$, $R^2$, $R^3$ and $R^4$ represent independently hydrogen, a hydrocarbon group having 2 to 18 carbon atoms or a residual group of a fatty acid having 2 to 18 carbon atoms, respectively.

The hydrocarbon group constituting $R^1$, $R^2$, $R^3$, and $R^4$ may be a straight chain or branched chain hydrocarbon group, or may be a saturated or unsaturated hydrocarbon group. Further, the number of carbon atoms of the hydrocarbon group may preferably be 8 to 17 and more preferably be 12 to 16. The hydrocarbon group may be, for example, ethane, pentane, decane, tetradecane, octadecane and the like.

Further, the residual group of a fatty acid constituting $R^1$, $R^2$, $R^3$ or $R^4$ means a group ($R^1CO$-, $R^2CO$-, $R^3CO$-, $R^4CO$-) excluding hydroxyl group (OH) from carboxyl group (COOH) of the fatty acid ($R^1COOH$, $R^2COOH$, $R^3COOH$. $R^4COOH$). The fatty acid may be a straight-chain or branched-chain fatty acid and may be a saturated or unsaturated fatty acid. Further, the number of carbon atoms of the residual group of the fatty acid may preferably be 8 to 17 and more preferably be 12 to 16. The fatty acid may be, for example, acetic acid, caprylic acid, capric acid, lauric acid, myristic acid, palmitic acid, isopalmitic acid, hexadecanoic acid, oleic acid, linoleic acid and the like.

Specifically, the derivative of ascorbic acid represented by the formula (1) may be, for example, a hydrocarbon-substituted ascorbic acid such as 3-O-ethyl ascorbic acid, 5,6-O-isopropylydene ascorbic acid, 3-O-octyl ascorbic acid, 3-O-dodecyl ascorbic acid, ascorbyl palmitate such as ascorbyl 6-O-palmitate, ascorbyl dipalmitate such as ascorbyl 2,6-di-O-dipalmitate, ascorbyl stearate, ascrobyl tetrapalmitate and ascorbyl tetra 2-hexyldecanoate. It may be used alone or the two or more kinds may be used in combination. Among them, ascorbyl 6-O-palmitate, ascorbyl 2 , 6-di-O-palmitate, ascorbyl tetra 2-hexyldecanoate and 3-O-ethyl ascorbic acid are preferred on the viewpoint of mechanical property of and stickiness on the surface of the cross-linked rubber, and ascorbyl 6-O-palmitate is particularly preferred on the viewpoint of the mechanical property.

Other specific examples of the derivative of ascorbic acid may be, for example, ascorbic acid esters such as sodium ascorbic acid-2-phosphate ester, magnesium ascorbic acid-2-phosphate ester, sodium ascorbic acid-2-sulfate ester, magnesium ascorbic acid-2-sulfate ester; ascorbic acid sugar derivatives such as ascorbic acid 2-glucoside, ascorbic acid 5-glucoside, ascorbyl tocopheryl maleate, ascorbyl tocopheryl phosphate K, myristic-3-glyceryl ascorbic acid, caprylyl 2-glyceryl ascorbic acid and the like; 6-position acylates of the ascorbic acid sugar derivatives (the acyl group is hexanoyl group, octanoyl group, decanoyl group ore the like), sodium ascorbic acid 2-phosphate-6-O-palmitate, glyceryl ascorbic acid or its acylate derivative, glyceryl derivatives of ascorbic acid such as bis-glyceryl ascorbic acid, ascorbic acid phosphate aminopropyl, hyaluronic acid derivative of ascorbic acid, 3-O-D-lactose-L-ascorbic acid, isostearyl ascorbyl phosphate, sodium isoascorbate and the like.

(Barbituric acid and derivative of barbituric acid)

The derivative of barbituric acid may be, for example, 1-alkyl derivatives such as 1-methyl derivative, 1-ethyl derivative and the like, 1,3-dialkyl derivatives such as 1,3-dimethyl derivative, 1,3-diethyl derivative, 1,3-dibutyl derivative and the like, 1,3-diaryl derivatives such as 1,3-diphenyl, 1,3-di(p-chlorophenyl), 1,3-di(p-ethoxycarbonylphenyl) derivative and the like, 1-alkyl-1-aryl derivatives such as 1-ethyl-3-phenyl derivative and the like, and 1,3-position dihetero ring-substituted derivatives such as 1,3-di(2-pyridyl) derivative and the like.

(Anionic salt of dithionous acid or anionic salt of sulfurous acid)

As the specific examples, sodium dithionite, sodium sulfite, ammonium sulfite and the like are listed.

(Sulfinic acid and sulfinate)

Examples of sulfinic acid may be benzene sulfinic acid, cysteine sulfinic acid and the like. Specific examples of the sulfinates may be sodium benzene sulfinate, lithium benzene sulfinate, p-toluene sulfinate and the like.

(Aliphatic amine)

Specific examples of the above aliphatic amines may be triethanolamine and diethylene triamine.

(Heterocyclic amine)

Specific examples of the heterocyclic amines may be phenyl morpholine and piperidine.

(Aromatic amine)

The aromatic amine may be aniline, a derivative of aniline, p-toluidine, m-toluidine, N-substituted p-toluidine, N,N-substituted p-toluidine and 4-(N,N-substituted amino)benzaldehyde.

Specific examples of the above derivative of aniline may be N,N-dimethyl aniline, N,N-diethyl aniline, N,N-bis(hydroxyethyl) aniline and diethanol aniline.

Specific examples of the above N-substituted p-toluidine may be N-ethyl-m-toluidine.

Specific examples of the above N,N-substituted-p-toluidine may be N,N-dimethyl-p-toluidine, N,N-diethyl-p-toluidine, N,N-di(2-hydroxyethyl)-p-toluidine, N,N-di(2-hydorxypropyl)-p-toluidine, an ethylene oxide-adduct of N,N-di(2-hydroxyethyl)-p-toluidine or N,N-di(2-hydroxypropyl)-p-toluidine, a propylene oxide-adduct of N,N-di(2-hydoxyethyl)-p-toluidine and a propylene oxide-adduct of N,N-di(2-hydroxypropyl)-p-toluidine.

Specific examples of the above 4-(N,N-substituted amino)benzaldehyde may be 4-(N,N-dimethylamino)benzaldehyde, 4-[N,N-bis(2-hydroxyethyl)amino]benzaldehyde and 4-(N-methyl-N-hydroxyethylamino)benzaldehyde.

(Thiourea compound)

Specific examples of the above thiourea compounds may be thiourea, ethylene thiourea, N,N'-dimethyl thiourea, N,N'-diethyl thiourea, N,N'-dipropyl thiourea, N,N'-di-n-butyl thiourea, N,N'-dilauryl thiourea, N,N'-diphenyl thiourea, trimethyl thiourea, 1-acetyl-2-thiourea and 1-benzoyl-2-thiourea.

Among them, ascorbic acid, the derivative of ascorbic acid, barbituric acid, the derivative of barbituric acid, the anion of dithionous acid or salt of sulfurous acid, sulfinic acid, the salt of sulfinic acid and Rongalite (sodium hydroxymethane sulfinic acid) are preferred, ascorbic acid is more preferred.

(Vulcanization accelerator (D))

Although the vulcanization accelerator (D) is not particularly limited, quinoid series, resin series, sulfur series, triazine series, polyol series, polyamine series and maleimide series are listed, and the two or more kinds may be used in combination.

The quinoid series vulcanization accelerator may be, for example, p-quinone dioxime, p,p'-dibenzoyl quinone dioxime, tetrachloro-p-benzoquinone, poly-p-dinitrobenzene and the like. The quinoide series vulcanization accelerator may be used alone or the two or more kinds may be used in combination.

The resin vulcanization accelerator may be, for example, alkyl phenol formaldehyde resin, melamine-formaldehyde condensation product, triazine-formaldehyde condensation product, octylphenolformaldehyde resin, alkylphenol

sulfide resin, hexamethoxymetyl-melamine resin and the like. The resin vulcanization accelerator may be used alone or the two or more kinds may be used in combination.

The sulfur series vulcanization accelerator may be 2,2'-dibenzothiazolyl disulfide, morpholine disulfide, alkylphenol disulfide, N,N'-dithio-bis(hexahydro-2H-azepinone-2), thiuram polysulfide, 2-(4'-morpholino-dithio)benzothiazole, amylphenol disulfide polymerized product and the like. The sulfur-containing organic vulcanizing agent may be used alone or the two or more kinds may be used in combination.

The polyamine series vulcanization accelerator may be, for example, hexamethylene diamine carbamate, hexamethylene diamine, triethylene-tetramine, tetraethylene-pentamine, 4,4'-methylene bis(cyclohexylamine)carbamate, N,N'-dicinnamylidene-1,6-hexanediamine, ammonium benzoate and the like. The polyamine series vulcanization accelerator may be used alone or the two or more kinds may be used in combination.

The triazine series vulcanization accelerator may be, for example, 2,4,6-trimercapto-s-triazine, 2-di-n-butylamino-4,6-dimercapto-s-triazine and the like. The triazine series vulcanization accelerator may be used alone or the two or more kinds may be used in combination.

The polyol series vulcanization accelerator may be, for example, bisphenol A, bisphenol AF, hydroquinone, pentaerythritol and the like. The polyol series vulcanization accelerator may be used alone or the two or more kinds may be used in combination.

The maleimide series vulcanization accelerator may be, for example, N,N'-m-phenylene dimaleimide and the like.

The blending ratios of the respective components of the rubber composition for hot air cross-linking of the present invention will be described below.

100 mass parts are assigned to the content of one or more of the rubber contents (A) selected from the group consisting of the ethylene-propylene rubber and ethylene-propylene-diene rubber. In the case that the component (A) selected from the group consisting of the ethylene-propylene rubber and ethylene-propylene-diene rubber is a mixture, 100 mass parts are assigned to the total content.

The ratio of the organic peroxide (B) is made 1.0 mass parts or higher, on the viewpoint of the mechanical property and heat resistance of the cross-linked rubber, with respect to 100 mass parts of the rubber component (A). Further, the content of the organic peroxide (B) is made 15.0 mass parts or lower, on the viewpoint of the elongation of the rubber.

The ratio of the organic peroxide (B) may preferably be 2.0 mass parts or higher and more preferably be 3.0 mass parts or higher. Further, the ratio of the organic peroxide (B) may preferably be 10.0 mass parts or lower, more preferably be 8.0 mass parts or lower and most preferably be 6.0 mass parts or lower.

The ratio of the reducing agent (C) may preferably be 0.01 mass parts or higher and 9.0 mass parts or lower, with respect to 100 mass parts of the rubber component (A). The ratio of the reducing agent (C) is made 0.01 mass parts or higher and more preferably be 0.1 mass parts or higher, on the viewpoint of the mechanical property of the cross-linked rubber. Further, the ratio of the reducing agent (C) is made 9.0 mass parts or lower, may preferably be 5.0 mass parts or lower and more preferably be 3.0 mass parts or lower, on the viewpoint of the mechanical property.

The mass ratio of the organic peroxide (B) and reducing agent (C) (organic peroxide (B)/ reducing agent (C)) may preferably be 1.0 or higher and 400.0 or lower and more preferably be 3.0 or higher and 100.0 or lower, on the viewpoint of the mechanical property of the cross-linked rubber.

The ratio of the vulcanization accelerator (D) may preferably be 0.1 mass parts or higher and more preferably be 1.0 mass part or higher, with respect to 100 mass parts of the rubber component (A). Further, the ratio of the vulcanization accelerator (D) may preferably be 10.0 mass parts or lower and more preferably be 7.0 mass parts or lower.

Further, the rubber composition for hot air vulcanization of the present invention may contain carbon black, on the viewpoint of wear resistance.

As the carbon black, commercial products may be used, and furnace black generally used as a reinforcing agent may be used. The carbon black may preferably have a specific surface area of nitrogen absorption of 20 to 60$m^2$/g and a DBP oil absorption of 40 to 130ml/100g and, for example, it may be used FEF carbon black or SRF carbon black, on the viewpoint of kneadability and formability when a high content of bituminous fine powder is filled.

The commercial products of the carbon black may be product names "SEAST SO" and "SEAST S" (listed above, produced by TOKAI CARBON Co., Ltd.), "ASAHI #55", "ASAHI #51" and "ASAHI #50"

(listed above, produced by ASAHI CARBON Co., Ltd.)

In the case that the rubber composition for hot air cross-linking of the present invention contains carbon black, the ratio of the carbon black may preferably be 5 mass parts or higher and more preferably be 20 mass parts or higher on the viewpoint of wear resistance with respect to 100 mass parts of the rubber component (A), and may preferably be 150 mass parts or lower and more preferably be 120 mass parts or lower, on the viewpoint of elongation of the rubber.

Further, the rubber composition for hot air vulcanization of the present invention may contain the other component, generally used for processing of an elastomer, such as additives including cross-linking agents, filler agents, oxidation preventing agents, aging preventing agents, ultraviolet light absorbing agents, flame retardants and the like, plasticizing agents such as process oils, and lubricants such as stearic acid, at an optional ratio. The other component may be used alone or the two or more kinds may be used in combination.

In the case that the rubber composition for hot air cross-linking of the present invention contains the other component, with respect to 100 mass parts of the rubber component (A), the ratio of the other component may preferably be 0.5 mass parts or higher and more preferably be 1 mass part or higher, or, the ratio may preferably be 100 mass parts or lower and more preferably be 60 mass parts or lower.

(Method of producing rubber composition for hot air cross-linking)

The rubber composition for hot air cross-linking of the present invention can be obtained by the production method of mixing the respective components described above. The method of kneading may be performed by a known method generally used for processing elastomers. For example, kneading machines such as an open roll, bunbury mixer, kneader, extruder, transfer mixer and the like may be used, and a kneader is preferred.

(Cross-linked rubber)

The cross-linked rubber of the present invention is made from the rubber composition for hot air cross-linking of the present invention. Specifically, is can be obtained by heating (cross-linking) the rubber composition under the presence of air. The method of heating (cross-linking) can be performed by a known method, and can be appropriately decided depending on the kind of the organic peroxide used, kind of the rubber to be cross-linked and required property.

According to the present invention, as an oven vulcanization system, a hot wind system oven and hot wind system heating furnace, equipped with a preliminary heating system such as microwave (high frequency), far infrared ray, thermo-electricity and the like (for example, MMV type hot wind system heating furnace produced by Micro Denshi Co., Ltd.: Gear type aging test machine produced by TOYO SEIKI KOGYO CO., Ltd. And the like), can be used. The heating temperature may preferably be 120°C to 250°C and more preferably be 130°C to 200°C. The heating time duration may preferably be 3 minutes to 60 minutes and more preferably be 5 minutes to 30 minutes.

EXAMPLES

Although the present invention will be described further in detail below referring to examples, the present invention is not to be limited to the examples.

In the respective inventive and comparative examples, raw materials shown in tables 1 to 4 were blended (unit: mass parts), uniformly kneaded by a kneader, and stretched by a rolling machine into a shape of a plate. The plate is then cooled to room temperature so that a rubber composition (rubber sheet with 10 cm and 20 cm and a thickness of 2 cm).

The composition was cut into a sheet having a length of 15 cm and a width of 20 cm, a hole is formed in the sheet, and the sheet is hanged by a hook in a central part of an incubator and heated under the presence of air at 180°C for 15 minutes to obtain cross-linked rubbers.

(Evaluation of mechanical property)

The cross-linked rubber described above was cut through with Dummbell No. 3 and subjected to tensile test based on JIS K6251 (tensile speed of 500 mm/min) so that the fracture stress and degree of elongation were measured.

(Stickiness on surface)

After the cross-linking of the rubber, the rubber was cooled for 1 hour at 23 °C in a space of a humidity of 50%, and the stickiness was evaluated by contacting the whole surface of a ball of a finger of a human over 10 seconds. The evaluation was performed by evaluating at 5 degrees according to the following standard by 10 males and females of ages of 24 to 55 years and by obtaining the average. The results were shown in tables 1 to 4.

(Evaluation points)

5 points; Stickiness is not observed.
4 points; Stickiness is slightly observed.

3 points; Stickiness is observed, although the trace of the finger is not left.
2 points; The trace of the finger is slightly left.
1 point; The trace of the finger is left.

(Symbols of judgement)

◎; average point is 4.0 points or higher.
◦: The average point is 3.0 points or higher and lower than 4.0 points.
△; average point is 2.0 points or higher and lower than 3.0 points.
×: average point is 1.0 point or higher and lower than 2.0 points.

(Stability of storage of compound)

The rubber composition (before the cross-linking) was stored at 30 °C in an incubator over 1 month, and the mechanical property was tested as described above and calculated according to the following formula.

(Standards for evaluation)

◎: 99% or higher
◦: 95% or higher and lower than 99%
×: lower than 95%

$$\frac{\text{fracture stress after storage(MPa)}}{\text{Fracture stress before storage(MPa)}} \times 100 + \frac{\text{Degree of elongation after storage(\%)}}{\text{Degree of elongation before storage(\%)}} \times 100$$

Table 1

| | | | | Ex. 1 | Ex. 2 | Ex. 3 |
|---|---|---|---|---|---|---|
| COMPOSITION | Rubber Component (A) | EPDM | 1 | 100.0 | | |
| | | | 2 | | 100.0 | |
| | | EPM | | | | 100.0 |
| | Organic peroxide(B) | 1 | | 3.7 | 3.7 | 3.0 |
| | | 2 | | | | |
| | Reducing Agent (C) | Ascorbic acid | | 0.2 | 0.2 | 1.0 |
| | | 6-O-palmitic acid -L-ascorbyl | | | | |
| | | 2,6-di-O-palmitic acid-L-ascorbyl | | | | |
| | | tetra-2-hexyldecanoic acid ascorbyl | | | | |
| | | 3-O-ethyl ascorbic acid | | | | |
| | (B)/(C) | | | 18.5 | 18.5 | 3.7 |
| | Vulcanizatio n Accelerator (D) | NOCCELAR TRA | | | | |
| | | NOCCELAR CZ | | | | |
| | | SUNCELAR AP | | | | |
| | | MBTS | | | | |
| | Sulfur | | | | | |
| | Carbon black | | | 100.0 | 100.0 | 100.0 |
| | Other blending agents | Zinc oxide | | 5.0 | 5.0 | 5.0 |
| | | Stearic acid | | 1.0 | 1.0 | 1.0 |
| | | Process oil | | 50.0 | 50.0 | 50.0 |
| EF FE CT | Mechanical Property | Fracture stress (MPa) | | 4.3 | 4.2 | 4.2 |
| | | Degree of elongation(%) | | 234.0 | 245.1 | 221.0 |
| | Stickiness on surface | | | ◎ | ◎ | ○ |
| | Storage stability of compound | | | ◎ | ◎ | ◎ |

(continued)

| | | | | Ex. 4 | Ex. 5 | Ex. 6 |
|---|---|---|---|---|---|---|
| COMPOSITION | Rubber Component (A) | EPDM | 1 | 80.0 | 100.0 | 100.0 |
| | | | 2 | | | |
| | | EPM | | 20.0 | | |
| | Organic Peroxide(B) | 1 | | 3.5 | 10.0 | |
| | | 2 | | | | 3.7 |
| | Reducing Agent (C) | Ascorbic acid | | 2.0 | 0.2 | 0.2 |
| | | 6-O-palmitic acid -L-ascorbyl | | | | |
| | | 2,6-di-O-palmitic acid-L-ascorbyl | | | | |
| | | tetra-2-hexyldecanoic acid ascorbyl | | | | |
| | | 3-O-ethyl ascorbic acid | | | | |
| | (B)/(C) | | | 1.8 | 50.0 | 18.5 |
| | Vulcanization-Accelerator (D) | NOCCELAR TRA | | | | |
| | | NOCCELAR CZ | | | | |
| | | SUNCELAR AP | | | | |
| | | MBTS | | | | |
| | Sulfur | | | | | |
| | Carbon black | | | 100.0 | 100.0 | 100.0 |
| | Other blending agents | Zinc oxide | | 5.0 | 5.0 | 5.0 |
| | | Stearic acid | | 1.0 | 1.0 | 1.0 |
| | | Process oil | | 50.0 | 50.0 | 50.0 |
| Eff ect | Mechanical Property | Fracture stress (MPa) | | 4.1 | 5.7 | 4.3 |
| | | Degree of elongation(%) | | 244.0 | 213.4 | 231.0 |
| | Stickiness on surface | | | ○ | ◎ | ○ |
| | Storage stability of compound | | | ◎ | ◎ | ○ |

Table 2

| | | | | Ex. 7 | Ex. 8 | Ex. 9 |
|---|---|---|---|---|---|---|
| COMPOSITION | Rubber Component (A) | EPDM | 1 | 100.0 | 100.0 | 100.0 |
| | | | 2 | | | |
| | | EPM | | | | |
| | Organic Peroxide | 1 | | 3.7 | 3.7 | 3.7 |
| | | 2 | | | | |
| | Reducing Agent (C) | Ascorbic acid | | 0.1 | 0.01 | |
| | | 6-O-palmitic acid-L-ascorbyl | | | | 0.2 |
| | | 2,6-di-O-palmitic acid-L-ascorbyl | | | | |
| | | tetra-2-hexyldecanoic acid ascorbyl | | | | |
| | | 3-O-ethyl ascorbic acid | | | | |
| | (B)/(C) | | | 37.0 | 370.0 | 18.5 |
| | Vulcanization Accelerator (D) | NOCCELAR TRA | | | | |
| | | NOCCELAR CZ | | | | |
| | | SUNCELAR AP | | | | |
| | | MBTS | | | | |
| | Sulfur | | | | | |
| | Carbon black | | | 100.0 | 100.0 | 100.0 |
| | Other blending agents | Zinc oxide | | 5.0 | 5.0 | 5.0 |
| | | Stearic acid | | 1.0 | 1.0 | 1.0 |
| | | Process oil | | 50.0 | 50.0 | 50.0 |
| Eff ect | Mechanical Property | Fracture stress (MPa) | | 4.2 | 4.0 | 4.4 |
| | | Degree of elongation(%) | | 223.3 | 235.2 | 278.1 |
| | Stickiness on surface | | | ◎ | ○ | ◎ |
| | Storage stability of compound | | | ◎ | ◎ | ◎ |

(continued)

| | | | | Ex.10 | Ex.11 |
|---|---|---|---|---|---|
| COMPOSITION | Rubber component(A) | EPDM | 1 | 100.0 | 100.0 |
| | | | 2 | | |
| | | EPM | | | |
| | Organic peroxide(B) | 1 | | 3.7 | 3.7 |
| | | 2 | | | |
| | Reducing Agent (C) | Ascorbic acid | | | |
| | | 6-O-palmitic acid -L-ascorbyl | | | |
| | | 2,6-di-O-palmitic acid-L-ascorbyl | | 0.2 | |
| | | tetra-2-hexyldecanoic acid ascorbyl | | | 0.2 |
| | | 3-O-ethyl ascorbic acid | | | |
| | (B)/(C) | | | 18.5 | 18.5 |
| | Vulcanization accelerator(D) | NOCCELAR TRA | | | |
| | | NOCCELAR CZ | | | |
| | | SUNCELAR AP | | | |
| | | MBTS | | | |
| | Sulfur | | | | |
| | Carbon black | | | 100.0 | 100.0 |
| | Other blending agents | Zinc oxide | | 5.0 | 5.0 |
| | | Stearic acid | | 1.0 | 1.0 |
| | | Process oil | | 50.0 | 50.0 |
| Eff ect | Mechanical Property | Fracture stress (MPa) | | 4.0 | 4.6 |
| | | Degree of elongation(%) | | 219.6 | 233.1 |
| | Stickiness on surface | | | ◎ | ◎ |
| | Storage stability of compound | | | ◎ | ◎ |

Table 3

| | | | | Ex. 12 | Ex. 13 | Ex. 14 | Ex.15 |
|---|---|---|---|---|---|---|---|
| COMPOSITION | Rubber Component (A) | EPDM | 1 | 100.0 | 100.0 | 100.0 | 90.0 |
| COMPOSITION | Rubber Component (A) | EPDM | 2 | | | | |
| COMPOSITION | Rubber Component (A) | EPM | | | | | 10.0 |
| COMPOSITION | Organic peroxide(B) | 1 | | 3.7 | 3.7 | 3.7 | 3.7 |
| COMPOSITION | Organic peroxide(B) | 2 | | | | | |
| COMPOSITION | Reducing Agent (C) | Ascorbic acid | | | 0.2 | 0.2 | 0.2 |
| COMPOSITION | Reducing Agent (C) | 6-O-palmitic acid -L-ascorbyl | | | | | |
| COMPOSITION | Reducing Agent (C) | 2,6-di-O-palmitic acid-L-ascorbyl | | | | | |
| COMPOSITION | Reducing Agent (C) | tetra-2-hexyldecanoic acid ascorbyl | | | | | |
| COMPOSITION | Reducing Agent (C) | 3-O-ethyl ascorbic acid | | 0.2 | | | |
| COMPOSITION | (B)/(C) | | | 18.5 | 18.5 | 18.5 | 18.5 |
| COMPOSITION | Vulcanization accelerator (D) | NOCCELAR TRA | | | | | |
| COMPOSITION | Vulcanization accelerator (D) | NOCCELAR CZ | | | | | |
| COMPOSITION | Vulcanization accelerator (D) | SUNCELAR AP | | | 1.8 | | 1.8 |
| COMPOSITION | Vulcanization accelerator (D) | MBTS | | | | 0.2 | 0.2 |
| COMPOSITION | Sulfur | | | | | | |
| COMPOSITION | Carbon black | | | 100.0 | 100.0 | 100.0 | 100.0 |
| COMPOSITION | Other Blending Agents | Zinc oxide | | 5.0 | 5.0 | 5.0 | 5.0 |
| COMPOSITION | Other Blending Agents | Stearic acid | | 1.0 | 1.0 | 1.0 | 1.0 |
| COMPOSITION | Other Blending Agents | Process oil | | 50.0 | 50.0 | 50.0 | 50.0 |
| EFFECT | Mechanical Property | Fracture stress (MPa) | | 4.3 | 4.8 | 4.0 | 4.3 |
| EFFECT | Mechanical Property | Degree of elongation(%) | | 229.2 | 290.9 | 245.4 | 313.0 |
| EFFECT | Stickiness on surface | | | ◎ | ◎ | ◎ | ◎ |
| EFFECT | Storage stability of compound | | | ◎ | ○ | ○ | ○ |

Table 4

| | | | Com. Ex. 1 | Com. Ex. 2 | Com. Ex. 3 | Com. Ex. 4 |
|---|---|---|---|---|---|---|
| COMPOSITION | Rubber Component (A) | EPDM | 100.0 | 80.0 | 90.0 | 100.0 |
| | | | | | | |
| | | EPM | | 20.0 | 10.0 | |
| | Organic peroxide(B) | 1 | 3.7 | 3.7 | | 3.7 |
| | | 2 | | | | |
| | Reducing Agent | Ascorbic acid | | 10.0 | 0.2 | |
| | (B)/(C) | | - | 0.4 | 0.0 | - |
| | Vulcanization Accelerator (D) | NOCCELAR TRA | | | 0.5 | |
| | | NOCCELAR CZ | | | 0.5 | |
| | | SUNCELAR AP | | | | 1.8 |
| | | MBTS | | | | 0.2 |
| | (B)/(C) | | | | 1.5 | |
| | Carbon black | | 100.0 | 100.0 | 100.0 | 100.0 |
| | Other Blending Agents | Zinc oxide | 5.0 | 5.0 | 5.0 | 5.0 |
| | | Stearic acid | 1.0 | 1.0 | 1.0 | 1.0 |
| | | Process oil | 50.0 | 50.0 | 50.0 | 50.0 |
| EFF ECT | Mechanical Property | Fracture stress | 3.7 | 3.5 | 5.0 | 4.4 |
| | | Degree of elongation(%) | 180.0 | 280.0 | 350.0 | 240.0 |
| | Stickiness on surface | | × | ○ | ○ | Δ |
| | Storage stability of compound | | ○ | ○ | × | ○ |

The respective components shown in tables 1 to 4 are as follows.

(Rubber component (A))

EPDM 1: ethylene-propylene-diene copolymer (product name "EPT4045" produced by Mitsui Chemical Co., Ltd. propylene content 37.9 wt.%: diene content 8.1 wt. %, ethylene content 54 wt.%)
EPDM 2: ethylene-propylene-diene copolymer (product name "JSREP21" produced by JSR Co. Ltd. Mooney viscosity (ML(1+4) 125°C) is 26: propylene content 33.2 wt.%: diene content 5.8 wt.%: ethylene content 61 wt.%)
EPM: ethylene-propylene copolymer (product name "EP11" produced by JSR Co., Ltd.; Mooney viscosity (ML(1+4) 100°C) is 40: propylene content 48.0 wt.%: ethylene content 52.0 wt.%)

(Organic peroxide (B))

1: di(2-t-butyl peroxy isopropyl)benzene (half-life temperature at 10 hours is 119°C and purity is 99.0 wt.%);
2: 1,1-di(t-butyl peroxy)cyclohexane (half-life temperature at 10 hours is 90.7°C and purity is 94.1 wt.%);

(Reducing agent (C)):

Ascorbic acid (produced by Tokyo chemical Industry Co., Ltd.)
6-O-palmitic acid-L-ascorbyl (produced by Tokyo chemical Industry Co., Ltd.)
2,6-O-palmitic acid-L-ascorbyl (produced by Tokyo chemical Industry Co., Ltd.)
Tetra 2-hexyldecanoic acid ascorbyl (produced by Tokyo chemical Industry Co., Ltd.)
3-O-ethyl ascorbic acid (produced by Sigma-Aldrich Co.) (Vulcanization accelerator (D)):

Product name "NOCCELAR TRA", DPTT (dipentamethylene thiuram tetrasulfide produced by OUCHI SHINKO CHEMICAL INDUSTRIAL Co., Ltd.)
Product name "NOCCELAR CZ", CBS (N-cyclohexyl-2-benzothiazolyl sulphenamide produced by OUCHI SHINKO CHEMICAL INDUSTRIAL Co., Ltd.);
Product name "SUNCELAR AP", AP (amylphenol disulfide polymerized product produced by SANSHIN CHEMICAL INDUSTRY Co. Ltd.)
MBTS (2,2'-dibenzothiazolyl disulfide produced by Tokyo chemical Industry Co., Ltd.)
Sulfur (FUJIFILM WAKO PURE CHEMICAL Corporation, purity 99.0 wt.%)
Carbon black (product name "SEAST G-SO", produced by TOKAI CARBON Co. Ltd.)

(Other blending agent)

Zinc oxide (produced by Tokyo chemical Industry Co., Ltd.)
Stearic acid (produced by Tokyo chemical Industry Co., Ltd.) Process oil (product name "PW-90", produced by Idemitsu KosanCo.Ltd.)

The rubber compositions obtained by the inventive examples 1 to 15 provide excellent mechanical property (fracture stress and degree of elongation) of the cross-linked rubbers, suppressed stickiness on the surface and excellent stability of storage of the rubber composition.

According to the rubber composition of the comparative example 1, as the reducing agent (C) was not used, the mechanical property of the cross-linked rubber was inferior and the stickiness on the surface was generated.

According to the rubber composition of the comparative example 2, as the ratio of the reducing agent (C) exceeds 9.0 mass parts, the mechanical property of the cross-linked rubber was inferior.

According to the rubber composition of the comparative example 3, as sulfur was used without using the organic peroxide (B), excellent mechanical property and the effect of suppressing the stickiness on the surface were obtained. However, sulfur and the vulcanization accelerator were reacted during the storage so that the rubber composition after the storage could not been shaped.

According to the rubber composition of the comparative example 4, although the organic peroxide (B) and vulcanization accelerator were used, the surface was slightly sticked as the reducing agent (C) was not used.

## Claims

1. A rubber composition for hot air cross-linking, said rubber composition comprising:

   100 parts by mass of one or more rubber components (A) selected from the group consisting of an ethylene-propylene rubber and an ethylene-propylene-diene rubber,
   1.0 parts by mass or more and 15.0 parts by mass or less of an organic peroxide (B), and
   0.01 parts by mass or more and 9.0 parts by mass or less of a reducing agent (C).

2. The rubber composition for hot air cross-linking of claim 1, further comprising a vulcanization accelerator (D).

3. The rubber composition for hot air cross-linking of claim 1 or 2, wherein said reducing agent (C) comprises one or more selected from the group consisting of ascorbic acid, a derivative of ascorbic acid, barbituric acid, a derivative of barbituric acid, an anionic salt of dithionous acid, an anionic salt of sulfurous acid, sulfinic acid, a salt of sulfinic acid and sodium hydroxy methane sulfinate.

4. The rubber composition for hot air cross-linking of claim 3, wherein said derivative of ascorbic acid is represented by the following formula (1).

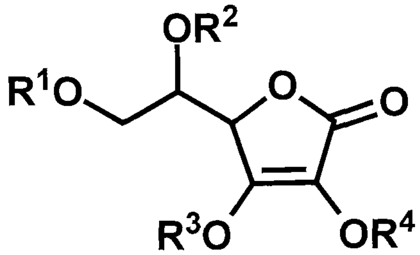

(1)

(In the formula (1),
$R^1$, $R^2$, $R^3$ and $R^4$ independently represent hydrogen, a hydrocarbon group having 2 to 18 carbon atoms or a residual group of a fatty acid having 2 to 18 carbon atoms.)

5. The rubber composition for hot air cross-linking of any one of claims 1 to 4, wherein said organic peroxide (B) comprises one or more selected from the group consisting of a dialkyl peroxide and a peroxy ketal.

6. A cross-linked rubber formed from the rubber composition for hot air cross-linking of any one of claims 1 to 5.

7. A method of producing a cross-linked rubber, the method comprising heating the rubber composition for hot air cross-linking of any one of claims 1 to 5 under the presence of air at 120°C to 250°C.

**INTERNATIONAL SEARCH REPORT**

International application No. **PCT/JP2021/045460**

**A. CLASSIFICATION OF SUBJECT MATTER**

***C08K 5/14***(2006.01)i; ***C08L 23/16***(2006.01)i
FI: C08L23/16; C08K5/14

According to International Patent Classification (IPC) or to both national classification and IPC

**B. FIELDS SEARCHED**

Minimum documentation searched (classification system followed by classification symbols)

C08K5/14; C08L

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2015-137315 A (HITACHI METALS LTD.) 30 July 2015 (2015-07-30) claims, paragraphs [0028], [0029] | 1, 2, 5-7 |
| X | JP 9-13008 A (HITACHI, LTD.) 14 January 1997 (1997-01-14) paragraphs [0023], [0024], [0031], [0032] | 1, 6, 7 |
| X | JP 2001-98163 A (SUMITOMO CHEMICAL CO., LTD.) 10 April 2001 (2001-04-10) claims, paragraphs [0126], [0127] | 1, 2, 5-7 |
| X | WO 2019/154825 A1 (NOURYON CHEMICALS INTERNATIONAL B.V.) 15 August 2019 (2019-08-15) claims, p. 8, line 27 to p. 9, line 24, p. 10, lines 15-23 | 1, 2, 5-7 |
| X | JP 2007-530730 A (THREE M INNOVATIVE PROPERTIES CO.) 01 November 2007 (2007-11-01) claims, paragraph [0016] | 1, 2, 5, 6 |
| X | JP 2004-277584 A (SUMITOMO CHEMICAL CO., LTD.) 07 October 2004 (2004-10-07) claims, paragraphs [0016], [0017] | 1, 2, 5-7 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 February 2022** | **01 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/045460**

**C. DOCUMENTS CONSIDERED TO BE RELEVANT**

| Category* | Citation of document, with indication, where appropriate, of the relevant passages | Relevant to claim No. |
|---|---|---|
| X | JP 56-11935 A (GENERAL ELECTRIC CO.) 05 February 1981 (1981-02-05) claims, examples, p. 4, upper right column to p. 4, lower left column, p. 5, upper right column, table 1 | 1, 2, 5-7 |
| A | JP 2014-225478 A (HITACHI METALS LTD.) 04 December 2014 (2014-12-04) paragraph [0023] | 1-7 |

Form PCT/ISA/210 (second sheet) (January 2015)

**INTERNATIONAL SEARCH REPORT**
**Information on patent family members**

International application No.
**PCT/JP2021/045460**

| Patent document cited in search report | Publication date (day/month/year) | Patent family member(s) | Publication date (day/month/year) |
|---|---|---|---|
| JP 2015-137315 A | 30 July 2015 | GB 2524621 A<br>claims, p. 6, line 24 to p. 7, line 4 | |
| JP 9-13008 A | 14 January 1997 | (Family: none) | |
| JP 2001-98163 A | 10 April 2001 | (Family: none) | |
| WO 2019/154825 A1 | 15 August 2019 | US 2020/0369856 A1<br>EP 3749709 A1<br>CN 111655773 A<br>KR 10-2020-0120919 A<br>TW 201936749 A | |
| JP 2007-530730 A | 01 November 2007 | US 2005/0215661 A1<br>claims, paragraph [0023]<br>WO 2006/016899 A1<br>EP 1727857 A1<br>CN 1957030 A<br>TW 200602469 A | |
| JP 2004-277584 A | 07 October 2004 | (Family: none) | |
| JP 56-11935 A | 05 February 1981 | US 4303574 A<br>claims, column 3, line 26 to column 4, line 5, column 5, lines 20-30, table I<br>FR 2459266 A1 | |
| JP 2014-225478 A | 04 December 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10110070 A
- JP 2018502949 A